# EUROPEAN PATENT SPECIFICATION

(11) **EP 2 325 610 B1**
(45) Date of publication and mention of the grant of the patent: **09.11.2011**
(21) Application number: 10382062.7
(22) Date of filing: 18.03.2010
(51) Int. Cl.: G01D 5/347

(54) **Optoelectronic measuring device**
Optoelektronisches Messgerät
Dispositif de mesure opto-électronique

(43) Date of publication of application: 25.05.2011
(73) Proprietor: Fagor, S. Coop., 20500 Arrasate-Mondragon (ES)
(72) Inventor: Zunzunegui Múgica, José Javier, 20550 Aretxabaleta (ES); Delgado Jiménez, Juan Carlos, 20500 Mondragon (ES)
(74) Representative: Igartua, Ismael

(56) References cited:
- EP-A2- 1 111 346
- US-A- 4 541 181
- US-A- 4 584 773
- US-A- 4 759 132
- US-A- 5 511 321

## Description

### TECHNICAL FIELD

The present invention relates to optoelectronic measuring devices that comprise a profile, a measuring band arranged inside said profile, and a read head that moves in relation to said measuring band.

### PRIOR ART

Optoelectronic measuring devices that comprise a profile with a longitudinal inner groove, a measuring band arranged in the longitudinal groove of the profile, a read head that moves along the longitudinal groove of the profile in order to inspect the measuring band, and a tensioning device for adjusting the tension of the measuring band during its installation in the groove of the profile, are known from prior art.

During the useful life of the device it is usually necessary to remove the read head from the profile on an occasional basis for the purposes of cleaning or maintenance, for example, and in general, depending on where the read head needs to be removed from, this is achieved by loosening the tension of the measuring band, which is a drawback in that the tension of said measuring band must be adjusted again so that the device can become operational once more.

Document US4534113 discloses an optoelectronic measuring device of this type. In this device the measuring band is fixed to the profile at one end by means of the tensioning device, and at the other end by means of screws that are arranged at a level below the path of the read head, thereby enabling said read head of said profile to be removed through said end, so that said removal is enabled through one of the two ends of the profile without it being necessary to loosen the tension of the measuring band in order to achieve this.

Document US 5511321 A discloses an optoelectronic measuring device as described in the preamble of claim 1.

### DISCLOSURE OF THE INVENTION

It is an object of the invention to provide an optoelectronic measuring device as described in the claims.

The optoelectronic measuring device comprises a profile that defines a longitudinal groove, a measuring band arranged in the longitudinal groove of the profile, attached to said profile at both ends, and a read head that moves along the longitudinal groove of the profile in order to read the measuring band. Thanks to said reading, with the device of the invention the relative movement of the read head in relation to the measuring band can be determined.

The device also comprises a tensioning device for adjusting the length of the measuring band, preferably during its installation, said measuring band being connected at one end to the profile by means of said tensioning device, and locking means adapted for locking the tensioning device, preferably once the measuring band comprises the required tension, so that an undesired adjustment of the length of said measuring band is prevented during the normal operation of the device of the invention, which can be caused, for example, by changes in temperature suffered by said device.

The locking means and the tensioning device are arranged outside the path of the read head, so result that the rapid and easy removal of the read head from the longitudinal groove of the profile through the end of the measuring band attached to said tensioning device is enabled, without the need to loosen the tension or the length of the measuring band, which provides the device of the invention with flexibility and also provides it with advantageous characteristics in comparison with the devices of the prior art.

These and other advantages and characteristics of the invention will be made evident in the light of the drawings and the detailed description thereof.

### DESCRIPTION OF THE DRAWINGS

Figure 1 shows an embodiment of the optoelectronic measuring device of the invention.
Figure 2 shows the optoelectronic measuring device of Figure 1, without cover.
Figure 3 shows a front view of the optoelectronic measuring device of Figure 1, without cover.
Figure 4 shows a tensioning device of the optoelectronic measuring device of Figure 1.
Figure 5 shows an exploded view of the tensioning device of Figure 4.
Figure 6 shows the tensioning device of Figure 4 attached to a measuring band of the optoelectronic measuring device of Figure 1.
Figure 7 shows a profile of the optoelectronic measuring device of Figure 1.
Figure 8 shows a second embodiment of the optoelectronic measuring device of the invention.
Figure 9 shows stoppers arranged on a support piece of the optoelectronic measuring device of Figure 8.

### DETAILED DISCLOSURE OF THE INVENTION

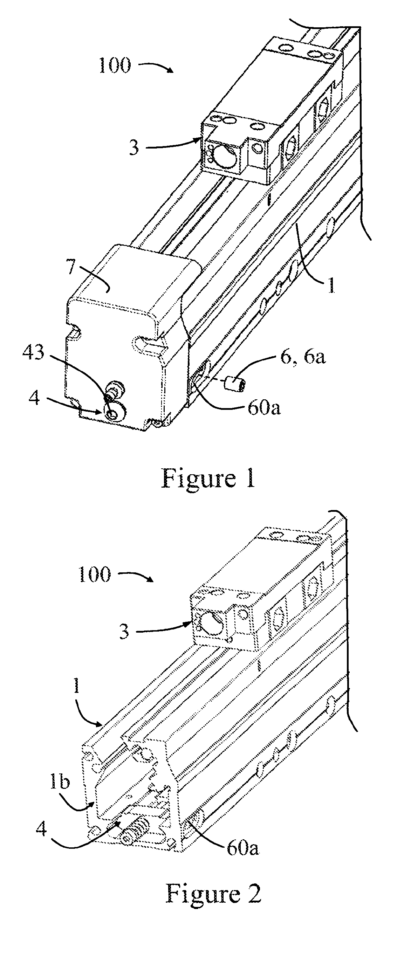

Figures 1 and 2 show an embodiment of the optoelectronic measuring device 100 of the invention. Said device 100 comprises a profile 1 with a longitudinal inner groove and which is closed on both sides by means of two covers 7 (Figure 1 shows a single cover 7), a measuring band 2 arranged in the longitudinal groove of the profile 1, and attached to said profile 1 at both ends, a read head 3 that moves along the longitudinal groove of the profile 1 in order to inspect the measuring band 2, and a tensioning device 4 for tensioning the measuring band 2, said measuring band 2 being attached at a first end to the profile 1 by means of said tensioning device 4 and at a second end to said profile 1 by means of connection means (not shown in the figures), such as at least a screw or an equivalent member.

The measuring band 2 comprises a plurality of marks not shown in the Figures, and the read head 3 comprises a light emitter (not shown in the figures) that emits a light beam towards said measuring band 2 and photodetector means (not shown in the figures) that receive the light that passes through or is reflected on said measuring band 2. Due to the marks of said measuring band 2, said received light comprises a shape determined by the movement of the read head 3, which is captured by the photodetector means, the device 100 being adapted for determining the relative position of said read head 3 in relation to said measuring band 2 in accordance with said received light.

Generally, the measuring band 2 comprises a slightly shorter length than the required length so that its length may subsequently be adapted to the operating conditions and/or the required environment by means of the tensioning device 4. When it is installed in the longitudinal groove of the profile 1, depending on the operating conditions and/or the environment (the temperatures, for example), it may be useful for said measuring band 2 to comprise a longer length (to an accuracy of around several hundredths of a metre), and the requirements of each case may be fulfilled by means of the tensioning device 4.

The device 100 of the invention also comprises locking means 6 adapted for locking the tensioning device 4, preferably once the device 100 has been installed correctly (when the measuring band 2 comprises the required length thanks to the tensioning device 4), so that the undesired tensioning or loosening of said measuring band 2, an undesired adjustment of its length, is prevented during the normal operation of the device 100 caused, for example, by changes in temperature suffered by said device 100.

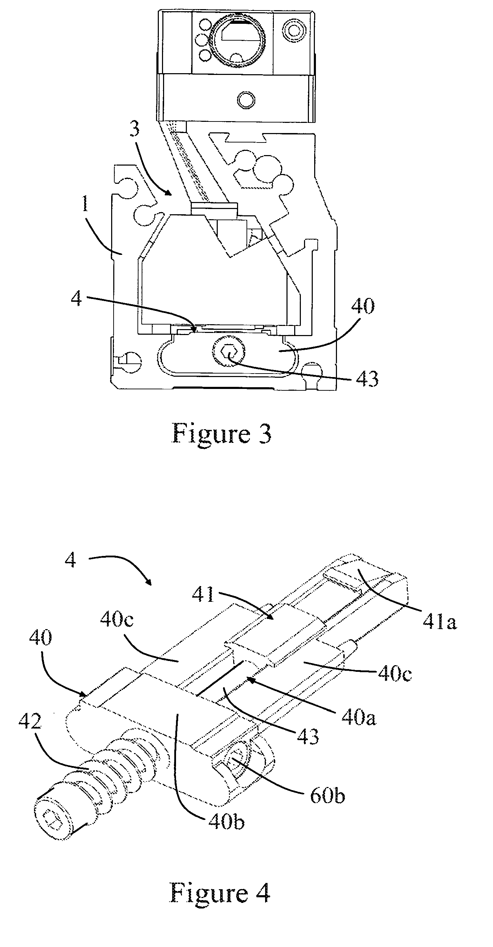

The locking means 6 and the tensioning device 4 are arranged outside the path of the read head 3, as shown, for example, in Figure 3, so that it enables or facilitates the removal of the read head 3 from the longitudinal groove of the profile 1 through the first end of the profile 1 closest to the first end of the measuring band 2, and therefore from the tensioning device 4, simply by releasing the corresponding cover 7. As a result, there is no need to dismantle said tensioning device 4, which would mean having to readjust the tension (length) of the measuring band 2 when inserting a read head 3 in the longitudinal groove of said profile 1, and/or the locking means 6, thereby resulting in a more comfortable and speedier removal of the read head 3 through said first end.

The locking means 6 comprise a locking member 6a that acts transversally on the tensioning device 4 in order to lock it. The locking member 6a corresponds to a screw or equivalent member, and a user can lock the tensioning device 4 by acting on said locking member 6a. The locking means 6 are preferably acted upon from the outside, and the profile 1 comprises a locking hole 60a, preferably transverse, to enable the locking member to move to the tensioning device 4.Said locking hole 60a is preferably formed in the side of the profile 1. The locking means 6 may comprise two locking members instead of one, the profile 1 comprising a locking hole 60a in each of its sides.

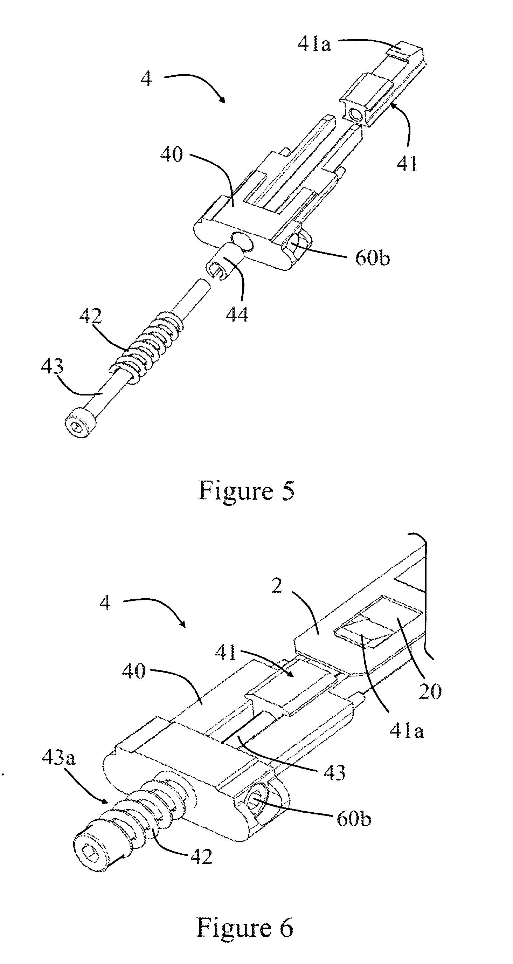

The tensioning device 4, shewn in Figures 4 to 6. comprises a fixed piece 40, a moving piece 41 that is attached to the end of the measuring band 2 and which moves in relation to the fixed piece 40 in order to adjust the tension or length of said measuring band 2. and an adjustment member 43 that is associated to said moving piece 41 and upon which a user acts in order to adjust the tension or length of the measuring band 2. As shown in Figure 6, the moving piece 41 preferably comprises a projection 41a that is housed in a hole 20 of the measuring band 2, said measuring band 2 thereby being joined to the tensioning device 4.

The locking means 6, by means of the locking member 6a, can act directly upon the moving piece 41 in order to lock the tensioning device 4, or alternatively they can act upon the adjustment member 43, given that when said adjustment member 43 is immobilised said moving piece 41 is indirectly immobilised, the tensioning device 4 being locked in both cases. In the event of the adjustment member 43 being immobilised, the locking member may act directly on said adjustment member 43, although the tensioning device 4 preferably comprises at least one bracket 44 or an equivalent member that covers, at least partially, part of said adjustment member 43, and said locking member acts on said bracket 44. As a result, the bracket 44 embraces the adjustment member 43 and immobilises it.

The fixed piece 40 comprises a shape that is substantially U-shaped, comprising a central opening 40a, a base 40b and two wings 40c, the moving piece 41 being arranged with freedom of movement in the central opening 40a, and the adjustment member 43 passing through said base 40b as a through pin and said moving piece 41 in a threaded manner, longitudinally. As a result, an action on said adjustment member 43 affects the moving piece 41 but not the fixed piece 40. The tensioning device 4 also comprises a spring 42 coiled in an external area 43a of the adjustment member 43, which is external to the fixed piece 40. When said adjustment member 43 is acted upon in order to adjust the tension of the measuring band 2, said adjustment member 43 moves in relation to the moving piece 41 due to the thread, thereby causing a compression or expansion of the spring 42, said spring 42 returning to its original position when the adjustment member 43 is no longer acted upon, which causes a longitudinale movement of said adjustment member 43 and of the moving piece 41 attached to said adjustment member 43, said movement of said moving piece 41 being the movement that adjusts the tension or length of the measuring band 2.

With this arrangement, in order to enable the locking member to act on the tensioning device 4, in addition to the locking hole 60a of the profile 1, the fixed piece 40 of the tensioning device 4 comprises an additional transverse locking hole 60b to enable the locking member 6a to move to the adjustment member 43. In the event of a direct action on the moving piece 41, the additional locking hole 60b is formed on at least one of the wings 40c of the fixed piece 40, whereas if the adjustment member 43 is acted on, said additional locking hole 60b is preferably formed in the base 40b of said fixed piece 40, as shown in Figures 4 and 6.

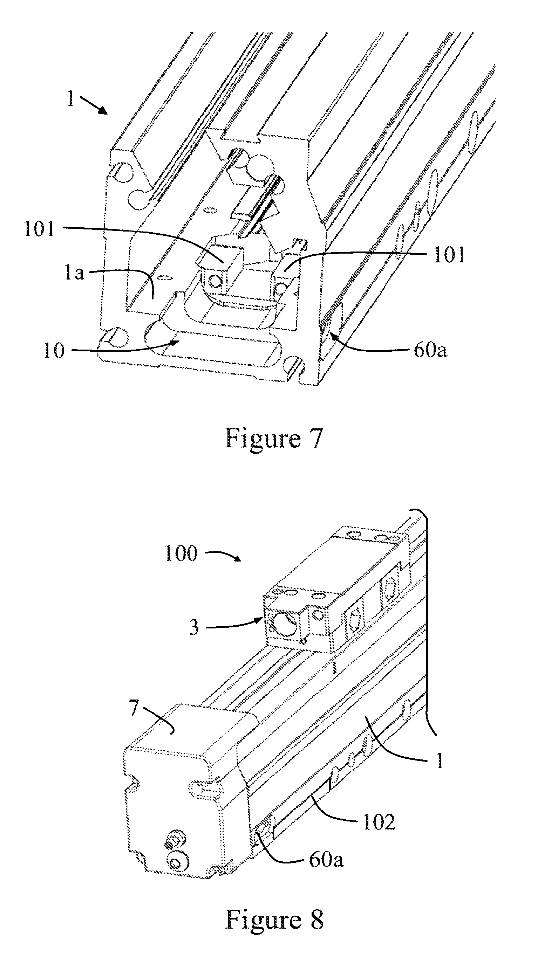

The profile 1 comprises a housing 10 for housing, at least partially, the tensioning device 4, shown in Figure 7. Said housing 10 is formed in a base 1a of said profile 1, and is accessible from one end 1b of said profile 1, so that the tensioning device 4 can be easily arranged on the profile 1.

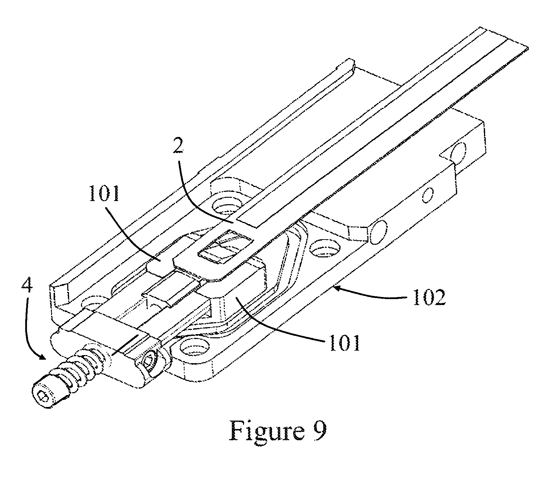

In a second embodiment of the invention shown in Figure 8, the device 100 also comprises at least one support piece 102 that is fixed to the profile 1 of said device 100, by means of which said device 100 is connected to a machine bench or workbench (not shown in the Figures). Said profile 1 comprises a housing (not shown in the figures) for housing said support piece 102. the housing 10 for the tensioning device 4 and said housing for the support piece 102 preferably being communicated. In both embodiments of the invention, the device 100 can also comprise at least one stopper 101 to delimit the position of the fixed piece 40. The stopper 101 can be formed in the profile 1 itself (which is the case in the embodiment and even the second embodiment) as shown in Figure 7, or can be arranged on a support piece 102 of the device 100 (which is possible only in the second embodiment) as shown in Figure 9.

## Claims

1. Optoelectronic measuring device, comprising
a profile (1) with a longitudinal inner groove,
a measuring band (2) arranged in the longitudinal groove of the profile (1), attached at both ends to said profile (1), and
a read head (3) that moves along the longitudinal groove of the profile (1) in order to read the measuring band (2),
**characterised in that**
the device (100) also comprises a tensioning device (4) for adjusting the length of the measuring band (2), said measuring band (2) being attached at one end to the profile (1) by means of said tensioning device (4), and locking means (6) adapted for locking the tensioning device (4) in respect of the profile (1),
the locking means (6) and the tensioning device (4) being arranged outside the path followed by the read head (3) when said read head (3) is removed from the profile (1), so that there is no need to dismantle said tensioning device (4).

2. Device according to claim 1, wherein the locking means (6) comprise a locking member (6a) that acts transversally on the tensioning device (4) in order to lock it.

3. Device according to claim 2, wherein the profile (1) comprises a locking hole (60a) or groove to enable the locking member to move from the outside of the profile (1) to the tensioning device (4).

4. Device according to any of the preceding claims, wherein the tensioning device (4) comprises a fixed piece (40), a moving piece (41) that is connected to the measuring band (2) and which moves in relation to the fixed piece (40) in order to adjust the tension of said measuring band (2), and an adjustment member (43) that is associated to said moving piece (41) and which it is acted upon in order to adjust the tension of the measuring band (2), the locking means (6) locking said moving piece (41).

5. Device according to claim 4, wherein the locking means (6) act directly on the moving piece (41).

6. Device according to claim 4, wherein the locking means (6) act directly on the adjustment member (43), the locking or immobilisation of said adjustment member (43) causing the locking or immobilisation of the moving piece (41).

7. Device according to claim 6, wherein the adjustment member (43) is substantially cylindrical, the tensioning device (4) comprising at least one bracket (44) that surrounds, at least partially, a perimeter area of the adjustment member (43), the locking means (6) acting on said bracket (44) in order to lock said tensioning device (4), said bracket (44) immobilising the adjustment member (43) as a result of said action.

8. Device according to any of claims 2 to 7, wherein the locking means (6) comprise two adjustment members (6a) that act transversally on two opposite surfaces of the device sensor (4).

9. Device according to any of claims 4 to 8, wherein the fixed piece (40) comprises a substantially U-shaped form, comprising a central opening (40a), a base (40b) and two wings (40c), the moving piece (41) being arranged with freedom of movement in the central opening (40a), and the adjustment member (43) passing through said base (40b) as a through pin and said moving piece (41) in a threaded manner.

10. Device according to any of claims 4 to 9, wherein the tensioning device (4) comprises a spring (42) coiled in an external area (43a) of the adjustment member (43) that is external to the fixed piece (40), said spring (42) causing the adjustment of the length of the measuring band (2) when the adjustment member (43) is acted upon, thereby causing the movement of the moving piece (41).

11. Device according to any of claims 4 to 10, comprising at least one stopper (101) for restricting and guiding the position in the profile (1) of the fixed piece (40) of the tensioning device (4).

12. Device according to claim 11, comprising two stoppers (101) that face each other, the moving piece (41) being arranged between both stoppers (101).

13. Device according to claims 11 or 12, wherein the profile (1) comprises the stopper (101).

14. Device according to claims 11 or 12, comprising a support piece (102) that is fixed to the profile (1), said support piece (102) comprising the stopper (101).

15. Device according to any of the preceding claims, wherein the profile (1) comprises a housing (10) in its base (1a) for housing, at least partially, the tensioning device (4), said housing (10) being accessible from one end (1b) of said profile (1).

## Patentansprüche

1. Optoelektronisches Messgerät, umfassend
ein Profil (1) mit einer inneren Längsrille,
ein Messband (2), das in der Längsrille des Profils (1) angeordnet und an beiden Enden mit dem Profil (1) verbunden ist, und
einen Lesekopf (3), der sich entlang der Längsrille des Profils (1) bewegt, um das Messband (2) abzulesen,
**dadurch gekennzeichnet, dass**
das Gerät (100) ebenso umfasst eine Spannvorrichtung (4) zur Regulierung der Länge des Messbands (2), wobei das genannte Messband (2) an einem Ende am Profil (1) über die genannte Spannvorrichtung (4) befestigt ist, sowie Verriegelungsmittel (6), der zum Verriegeln der Spannvorrichtung (4) in Bezug auf das Profil (1) angepasst ist, wobei die Verriegelungsmittel (6) und die Spannvorrichtung (4) außerhalb des Wegs angeordnet sind, der vom Lesekopf (3) verfolgt wird, wenn der Lesekopf (3) vom Profil (1) entfernt wird, so dass die Spannvorrichtung (4) nicht ausgebaut werden muss.

2. Gerät gemäß Anspruch 1, wobei die Verriegelungsmittel (6) ein Verriegelungsglied (6a) umfasst, das quer auf die Spannvorrichtung (4) einwirkt, um diese zu verriegeln.

3. Gerät gemäß Anspruch 2, wobei das Profil (1) eine Verriegelungsöffnung (60a) oder -rille umfasst, damit sich der das Verriegelungsglied von außerhalb des Profils (1) zur Spannvorrichtung (4) bewegen kann.

4. Gerät gemäß einem der vorausgehenden Ansprüche, wobei die Spannvorrichtung umfasst (4) ein Fixteil (40), ein bewegliches Teil (41), das mit dem Messband (2) verbunden ist, das sich im Verhältnis zum Fixteil (40) bewegt, um die Spannung des genannten Messbands (2) zu regulieren, und ein Regelungsglied (43), das mit dem beweglichen Teil (41) im Zusammenhang steht und auf das eingewirkt wird, um die Spannung des Messbands (2) zu regulieren, wobei die Verriegelungsmittel (6) das bewegliche Teil (41) verriegelt.

5. Gerät gemäß Anspruch 4, wobei die Verriegelungsmittel (6) direkt auf das bewegliche Teil (41) einwirkt.

6. Gerät gemäß Anspruch 4, wobei die Verriegelungsmittel (6) direkt auf das Regelungsglied (43) einwirkt, wobei die Verriegelung oder Immobilisierung des genannten Regelungsglieds (43) zur Verriegelung oder Immobilisierung des beweglichen Teils (41) führt.

7. Gerät gemäß Anspruch 6, wobei das Regelungsglied (43) im Wesentlichen zylinderförmig ist und die Spannvorrichtung (4) zumindest einen Träger (44) umfasst, der zumindest teilweise einen Umfangsbereich des Regelungsglieds (43) umschließt, wobei die Verriegelungsmittel (6) auf den Träger (44) einwirkt, um die Spannvorrichtung (4) zu verriegeln, so dass der Träger (44) infolge dieser Einwirkung das Regelungsglied (43) immobilisiert.

8. Gerät gemäß einem der Ansprüche 2 bis 7, wobei die Verriegelungsmittel (6) zwei Regelungsglieder (6a) umfasst, die quer auf zwei gegenüberliegende Flächen des Gerätesensors (4) einwirken.

9. Gerät gemäß einem der Ansprüche 4 bis 8, wobei das Fixteil (40) eine im Wesentlichen U-förmige Form umfasst, die eine mittlere Öffnung (40a), einen Sockel (40b) und zwei Flügel (40c) umfasst, wobei das bewegliche Teil (41) mit Bewegungsfreiheit in der mittleren Öffnung (40a) angeordnet ist und das Regelungsglied (43) als Durchgangsstift durch den Sockel (40b) geht und das genannte bewegliche Teil (41) mit Gewinde versehen ist.

10. Gerät gemäß einem der Ansprüche 4 bis 9, wobei die Spannvorrichtung (4) eine Feder (42) umfasst, die in einem äußeren Bereich (43a) des Regelungsglieds (43), der das Ende des Fixteils (40) ist, gewickelt ist, wobei die Feder (42) die Regulierung der Länge des Messbands (2) herbeiführt, wenn auf das Regelungsglied (43) eingewirkt wird, und **dadurch** die Bewegung des beweglichen Teils (41) verursacht.

11. Gerät gemäß einem der Ansprüche 4 bis 10, umfassend mindestens einen Stopper (101) zur Einschränkung und Führung der Position des Fixteils (40) der Spannvorrichtung (4) im Profil (1).

12. Gerät gemäß Anspruch 11, umfassend zwei sich gegenüberstehende Stopper (101), wobei das bewegliche Teil (41) zwischen beiden Stoppern (101) angeordnet wird.

13. Gerät gemäß Anspruch 11 oder 12, wobei das Profil (1) den Stopper (101) umfasst.

14. Gerät gemäß Anspruch 11 oder 12, umfassend ein Halteteil (102), das am Profil (1) fixiert ist, wobei das Halteteil (102) den Stopper (101) umfasst.

15. Gerät gemäß einem der vorausgehenden Ansprüche, wobei das Profil (1) ein Gehäuse (10) in seinem Sockel (1a) umfasst zur zumindest teilweisen Aufnahme der Spannvorrichtung (4), wobei das Gehäuse (10) von einem Ende (1 b) des Profils (1) aus zugänglich ist.

## Revendications

1. Dispositif de mesure optoélectronique, comprenant :
un profilé (1) avec une rainure intérieure longitudinale,
une bande de mesure (2) disposée dans la rainure longitudinale du profilé (1), fixée par ses deux extrémités audit profilé (1), et
une tête de lecture (3) qui se déplace le long de la rainure longitudinale du profilée (1) afin de lire la bande de mesure (2),
**caractérisé en ce que**
le dispositif (100) comprend aussi un dispositif tendeur (4) permettant de régler la longueur de la bande de mesure (2), ladite tige de mesure (2) étant fixée sur une extrémité du profilé (1) au moyen dudit dispositif tendeur (4) et d'un moyen de blocage (6) adapté pour verrouiller le dispositif tendeur(4) sur le profilé (1),
le moyen de blocage (6) et le dispositif tendeur (4) étant disposés à l'extérieur du parcours suivi par la tête de lecture (3) lorsque ladite tête de lecture (3) est retirée du profilé (1), de sorte qu'il n'y a pas besoin de démonter ledit dispositif tendeur(4).

2. Dispositif selon la revendication 1 où le moyen de blocage (6) comprend un organe de blocage (6a) qui agit de manière transversale sur le dispositif tendeur(4) afin de le bloquer.

3. Dispositif selon la revendication 2 où le profilé (1) comprend un trou ou une rainure de verrouillage (60a) pour que l'organe de blocage puisse se déplacer depuis l'extérieur du profilé (1) vers le dispositif tendeur(4).

4. Dispositif selon l'une quelconque des revendications précédentes où le dispositif tendeur (4) comprend une pièce fixe (40), une pièce mobile (41) qui est connectée à la bande de mesure (2) et qui se déplace par rapport à la pièce fixe (40) afin de régler la tension de ladite bande de mesure (2) et un organe de réglage (43) qui est associé à ladite pièce mobile (41) et qui est actionné afin de régler la tension de la bande de mesure (2), le moyen de blocage (6) verrouillant ladite pièce mobile (41).

5. Dispositif selon la revendication 4 où le moyen de blocage (6) agit directement sur la pièce mobile (41).

6. Dispositif selon la revendication 4 où le moyen de blocage (6) agit directement sur l'organe de réglage (43), le blocage ou l'immobilisation dudit organe (43) provoquant le blocage ou l'immobilisation de la pièce mobile (41).

7. Dispositif selon la revendication 6, où l'organe de réglage (43) est sensiblement cylindrique, le dispositif tendeur(4) comprenant au moins un support (44) qui entoure, au moins partiellement, un périmètre de l'organe de réglage (43), le moyen de blocage (6) agissant sur ledit support (44) afin de verrouiller ledit dispositif tendeur (4), ledit support (44) immobilisant l'organe de réglage (43) à la suite de cette action.

8. Dispositif selon l'une quelconque des revendications 2 à 7 où le moyen de blocage (6) comprend deux organes de réglage (6a) qui agissent de manière transversale sur deux surfaces opposées du capteur du dispositif (4).

9. Dispositif selon l'une quelconque des revendications 4 à 8 où la pièce fixe (40) est sensiblement en U et comprend une ouverture centrale (40a), une base (40b) et deux ailes (40c), la pièce mobile (41) étant disposée avec totale liberté de mouvement dans l'ouverture centrale (40a) et l'organe de réglage (43) traversant ladite base (40b) comme une broche et ladite pièce mobile (41) d'une manière fileté.

10. Dispositif selon l'une quelconque des revendications 4 à 9, où le dispositif tendeur(4) comprend un ressort (42) enroulé dans une zone extérieure (43a) à l'organe de réglage (43) extérieur à la pièce fixe (40), ledit ressort (42) entraînant le réglage de la longueur de la bande de mesure (2) lorsque l'organe de réglage (43) est actionné, provoquant par conséquent le déplacement de la pièce mobile (41).

11. Dispositif selon l'une des revendications 4 à 10, comprenant au moins une pièce d'arrêt (101) pour restreindre et guider le positionnement sur le profilé (1) de la pièce fixe (40) du dispositif tendeur(4).

12. Dispositif selon la revendication 11, comprenant deux pièces d'arrêt (101) l'une en face de l'autre, la pièce mobile (41) étant disposée entre les deux pièces d'arrêt (101).

13. Dispositif selon les revendications 11 ou 12, où le profilé (1) comprend pièce d'arrêt (101).

14. Dispositif selon les revendications 11 ou 12 comprenant une pièce support (102) qui est fixée sur le profilé (1), ladite pièce support (102) comprenant la pièce d'arrêt (101).

15. Dispositif selon l'une quelconque des revendications précédentes où le profilé (1) comprend une enceinte (10) dans sa base (1a) pour abriter, au moins partiellement, le dispositif tendeur (4), ladite enceinte (10) étant accessible depuis une extrémité (1b) dudit profilé (1).
